# EUROPEAN PATENT SPECIFICATION

(11) **EP 1 701 508 B1**
(45) Date of publication and mention of the grant of the patent: **14.09.2016**
(21) Application number: 06010526.9
(22) Date of filing: 19.03.1998
(51) Int. Cl.: H04L 29/08, H04L 29/06, G06F 17/30

(54) **Method for dynamically transcoding data transmitted between computers**
Verfahren zur dynamischen Transkodierung von Daten die zwischen Rechnern übertragen werden
Méthode pour le transcodage de données transmises entre ordinateurs

(30) Priority: 25.03.1997 US 41366 P; 08.09.1997 US 925275
(43) Date of publication of application: 13.09.2006
(62) Divisional of application: 98914254.2
(73) Proprietor: Intel Corporation, Santa Clara, CA 95054 (US)
(72) Inventor: Tso, Michael, Man-Hak, Hillsboro Oregon 97123 (US); Knauerhase, Robert Conrad, Portland, Oregon 97219 (US); Willis, Thomas G., Portland Oregon 97221 (US); Macielinski, Damien, Portland Oregon 97225 (US); Richardson, John W., Portland, Oregon 97212 (US)
(74) Representative: Walker, Ross Thomson

(56) References cited:
- FOX A ET AL: "ADAPTING TO NETWORK AND CLIENT VARIABILITY VIA ON-DEMAND DYNAMIC DISTILLATION" ACM SIGPLAN NOTICES, ASSOCIATION FOR COMPUTING MACHINERY, NEW YORK, US, vol. 31, no. 9, 1 September 1996 (1996-09-01), pages 160-170, XP000639230 ISSN: 0362-1340
- ELSON J ET AL: 'ICAP the Internet Content Adaptation Protocol; draft-elson-opes-icap-00.txt' 01 December 2000, XP015012887 ISSN: 0000-0004

## Description

### Field of the Invention

The present invention relates generally to the field of data communications for personal computers (PCs), and in particular to a system for dynamically transcoding data transmitted between two computers over a communications link.

### Related Art

The Internet is quickly becoming the preferred data communications medium for a broad class of computer users ranging from private individuals to large multi-national corporations. Such users now routinely employ the Internet to access information, distribute information, correspond electronically, and even conduct personal conferencing. An ever-growing number of individuals, organizations and businesses have established a presence on the Internet through "web pages" on the World-Wide Web (WWW).

For a wide variety of reasons, it may be desirable to manipulate data transmitted between a local client computer and a network server computer. For example, in certain instances it may be advantageous to dynamically add, modify or delete content retrieved from an Internet server computer before that content is provided to a client computer. Conversely, it may be advantageous to modify a content request from a client computer prior to transmitting the request to an Internet server computer. While such dynamic manipulation of requests and responses is desirable, it is impractical to expect the expansive Internet infrastructure to quickly change to accommodate such a new capability. For this reason, it is desirable to implement such new capabilities in a way that does not require changes to either existing client computers or Internet server computers.

It is known to deploy a proxy server, or network proxy, as an intermediary between one or more client computers and an external network such as the Internet. Network proxies are described generally in Ian S. Graham, HTML Source Book: A Complete Guide to HTML 3.0 403 (2d ed. 1996). A proxy architecture for performing daytatype-specific distillation to optimize the quality of service for clients in real time is described in Fox et al., "Adapting to Network and Client Variability via On-Demand Dynamic Distillation", ACM SIGPLAN Notices, Association for Computing Machinery, vol. 31, no. 9, pp 160-170 (Sept. 1, 1996). One common application for a proxy server is as a so-called "firewall", wherein the proxy server is responsible for all communications with the outside world. In other words, local devices are not permitted to communicate directly with external network computers, such as Internet servers. Instead, each local device directs requests for network-resident data to the proxy server. When the proxy server receives such a request, it forwards the request to the appropriate external computer, receives the response from the external computer, and then forwards the response to the local device. The external computer thus has no knowledge of the local devices. In this way, the local devices are protected from potential dangers such as unauthorized access.

Existing proxy servers do not manipulate the data passing through them. In essence, proxy servers are merely blind conduits for requests and responses. This limitation of existing proxy servers restricts these devices from being used to full advantage when facilitating communications between local devices and network devices. There is therefore a need for so-called "smart" proxy capable of examining the data passing through it, whether it be a request intended for an external network device or network content being returned to a local device, and dynamically acting upon that data. Such a device can be used to transparently provide a wide range of services that were heretofore impossible without modifying existing Internet infrastructure.

A conventional method for adapting to network and client variability via on-demand dynamic distillation is disclosed in Fox A et al: "Adapting to network and client variability via on-demand dynamic distillation", ACM sigplan notices, association for computing machinery, New York, US, Vo. 31, no. 9, 1 September 1996 (1996-09-01), pages 160-170, XP000639230, ISSN: 0362-1340.

### Summary of the Invention

According to the present invention, there is provided a method as defined in claim 1, with embodiments as defined in claims 2 and 3

Embodiments of the present invention relate to devices, systems and methods for transcoding information transmitted between computers, such as a network server computer and a network client computer.

According to one embodiment, an apparatus for applying the method of claim 1 and for use in transmitting data between a network server and a network client over a communications link includes a parser coupled to a transcode service provider. The parser is configured to selectively invoke the transcode service provider in response to a predetermined selection criterion.

### Brief Description of the Drawings

Fig. 1 is a schematic diagram illustrating an environment in which embodiments of the present invention may be applied.
Fig. 2 is a schematic diagram illustrating a transcoder module according to an embodiment of the present invention.
Fig. 3 is a schematic diagram illustrating an embodiment of the present invention for a non-enabled network client.
Fig. 4 is a schematic diagram illustrating an example of a user interface for providing a non-enabled network client with control over transcoding functionality.
Fig. 5 is a schematic diagram illustrating an embodiment of the present invention for an enabled network client.
Fig. 6 is a schematic diagram illustrating a network client with transcoding functionality integrated in a browser according to an embodiment of the present invention.
**Figs. 7-9** are flow charts illustrating logic for presenting a requested URL object to a network client according to an embodiment of the present invention.

### Detailed Description

Embodiments of the present invention provide the ability to dynamically transcode information transmitted between, for example, a network server computer and a network client computer. As used herein, the term "transcode" applies to virtually any manipulation of data including, but not limited to, adding, modifying or deleting data.

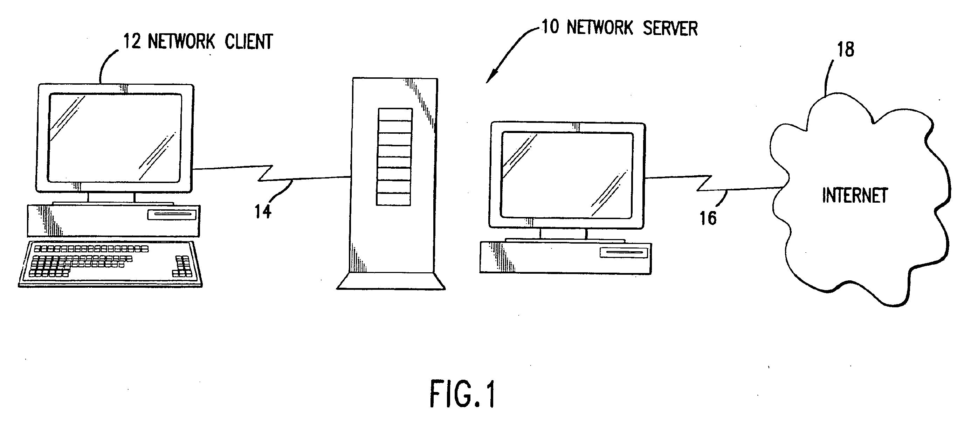

Referring now to **Fig. 1****,** which illustrates an environment in which embodiments of the present invention may be advantageously applied, a network server **10** manages the transfer of data from the Internet **18** to a network client **12.** Network client **12** may be any computer having suitable data communications capability.

Network client **12** communicates requests for information to, and receives information from, network server **10** over a client/server communications link **14.** Client/server communications link **14** may comprise, for example, a so-called "slow network" using, for example, POTS (Plain Old Telephone System) dial-up technology or wireless connections. Alternatively, client/server communications link **14** may comprise a so-called "fast network," such as a LAN or WAN (Wide Area Network), which is capable of operating at much higher speeds than are possible with slow networks. Combinations of these access methods are also possible. For example, network client **12** may use a POTS or wireless dial-up connection to a modem bank maintained by an ISP (Internet Service Provider), which is in turn connected to network server **10** over a LAN. Network server **10** communicates with computers resident on Internet **18** through server/network communications link **16,** which may comprise any suitable communications medium known in the art.

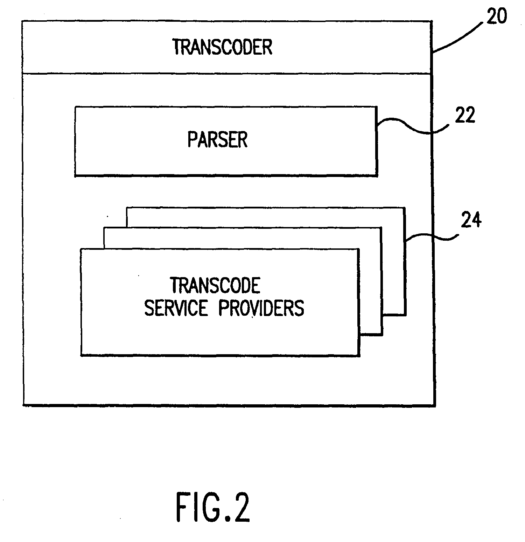

According to a first general embodiment of the present invention, illustrated schematically in **Fig. 2****, a** transcoder **20** includes a parser **22** and a plurality of transcode service providers **24.** Parser **22** is configured to act upon data received by transcoder **20,** such as a request for a network object generated by a client device or a reply to such a request provided by a content server device. In this particular embodiment, parser **22** is responsible for selectively invoking one or more of transcode service providers **24** based upon a predetermined selection criterion.

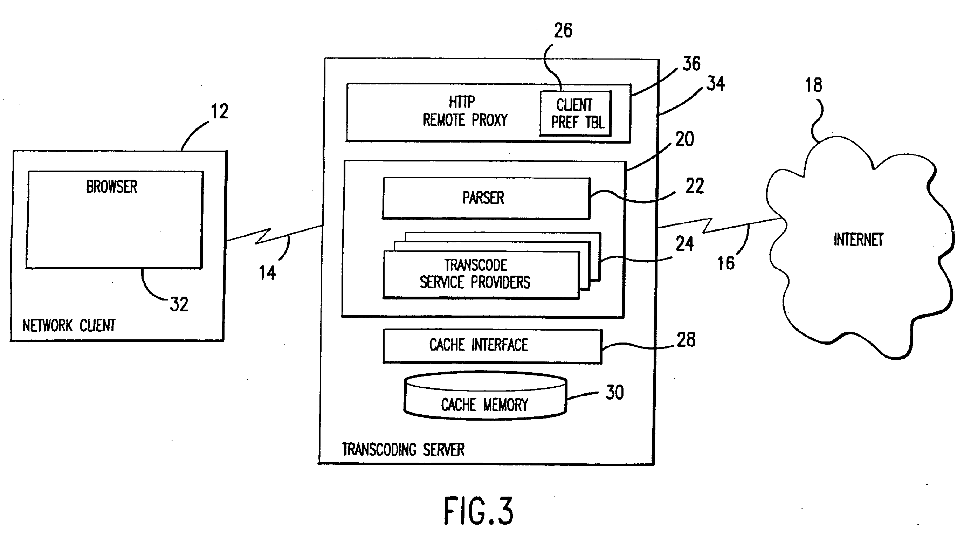

Transcoder **20** may be implemented, for example, as a software module installed in a network proxy, in a client device, in a network server device, or in a content server device. In one particular implementation, illustrated in **Fig. 3****,** transcoder **20** is installed in a remote transcoding server **34** arranged between network client **12** and Internet **18.** Transcoding server **34** may comprise, or be a part of, a network server, a stand-alone computer in communication with a network server, or a distributed system of computers. Remote transcoding server **34** may be coupled, for example, to an ISP's network, a corporate network, or anywhere on Internet **18,** and may provide multiple users (i.e., clients) with a means to obtain content on Internet **18.**

In the particular embodiment illustrated in **Fig. 3****,** transcoding server **34** includes an HTTP (HyperText Transfer Protocol) remote proxy **36,** capable of accessing Internet **18** over server/network communications link **16.** HTTP remote proxy **36** differs from known network proxies, which generally are little more than a conduit for requests to, and replies from, external Internet resources, in that it is capable not only of examining such requests and replies, but also of acting upon commands in the requests by, for example, determining whether or not to transcode content. Moreover, using transcoder **20,** HTTP remote proxy **36** is capable of changing content received from Internet **18** prior to returning it to a requesting network client **12,** as is explained further below.

Looking more closely at the embodiment in **Fig. 3****,** transcoder **20** is coupled to HTTP remote proxy **36.** Parser **22** manages the transcoding of data to be transmitted from transcoding server **34** to network client **12.** To this end, parser **22** controls transcode service providers **24** to selectively transcode content based on a predetermined selection criterion. For example, one or more transcode service providers **24** may provide the capability to compress and/or scale different types of data content, such as image, video, or HTML (HyperText Markup Language). Such uses are described further in co-pending U.S. patent applications Serial No. 08/772,164 entitled "System for Enhancing Data Access Over a Communications Link," filed on December 20, 1996, and Serial No. 08/799,654 entitled "Method and Apparatus for Scaling Image Data," filed on February 11, 1997, both of which are assigned to Intel Corporation. For purposes of illustrating certain features of the present invention, a number of embodiments are described below in terms of content scaling/compression; however, as is explained, transcode service providers **24** may provide a wide variety of transcoding functions.

As shown in **Fig. 3****,** transcoding server **34** may also include a server-side cache memory **30** managed by a server-side cache interface **28.** Server-side cache memory **30** may be used to store both original and transcoded versions of content for later transmission to network client **12** without the need to re-retrieve the content from Internet **18** or to re-transcode the content.

Transcoding server **34** is coupled to network client **12** by client/server communications link **14.** Network client **12** includes a browser **32,** such as the Netscape Navigator v.3.0 browser (although the invention is not limited in this respect), which manages the presentation of data to a user. In this embodiment, network client **12** is "non-enabled," meaning no specialized transcoding software is preloaded on network client **12.**

Parser **22** may comprise a relatively simple, uniform interface to HTTP remote proxy **36,** and may provide an API (Application Programming Interface) for transcoding data received by HTTP remote proxy **36.** Parser **22** manages one or more transcode service providers **24** that are accessed through a common SPI (Service Provider Interface). In this particular embodiment, parser **22** is designed in compliance with the Windows Open Systems Architecture (WOSA), and may be implemented as a Win32 DLL (Dynamic Link Library). The WOSA architecture, described in Readings on Microsoft Windows and WOSA (Microsoft Corp. 1995), enables additional transcode service providers **24** to be dynamically added to the system to provide new features and/or better transcoding algorithms, while at the same time not requiring changing or retesting other software components in the system. This feature is especially beneficial where transcoding server **34** also interacts with "enabled" network clients equipped with specialized transcoding software. It should be noted that some of the features of parser **22** described below may be inapplicable to the non-enabled client embodiment of **Fig. 3****;** however, transcoding server **34** may advantageously be configured flexibly enough to process requests from both non-enabled and enabled network clients.

Like parser **22,** server-side cache interface **28** may be modeled after a standard Get/Set interface. Server-side cache memory **30** essentially "owns" all cached objects, in that it manages the properties and storage of the objects and may invalidate any non-locked object at any time; however, the actual format of any given cached object is known only by parser **22** and its associated transcode service providers **24.** Thus, for data integrity and transcoding efficiency purposes, all access to server-side cache memory **30** in this embodiment is through parser **22.**

Server-side cache interface **28** may include the following calls:
CreateEntry(URL, &Entry, ...);
GetEntry(URL, &Entry);
CreateStream(Entry, &StreamEntry, ...);
GetStream(Entry, &StreamEntry, ...);
CloseEntry(Entry);
CloseStreamEntry(StreamEntry);
GetProperties(Entry, &Properties, ...);
SetProperties(Entry, &Properties, ...);
Read(StreamEntry, &OutStream, ...);
Write(StreamEntry, &InStream, ...).
Unlike most cache memories, server-side cache interface **28** and server-side cache memory **30** enable maintenance of multiple representations of a given cached object, with descriptive information about each representation included in server-side cache memory **30.** In addition, server-side cache interface **28** and server-side cache memory **30** serve as a synchronization point for multi-threaded accesses to cached objects. It should be noted that the illustrated embodiment does not require any particular configuration for server-side cache interface **28** and/or server-side cache memory **30.** Indeed, functionality attributed to these components in the various embodiments described herein may be readily implemented in other system components.

The CreateEntry() call creates and returns a cache entry for a specified hypertext object. This call also creates an entry stream for an original version of the hypertext object. Similarly, the GetEntry() call obtains a cache entry for a hypertext object already existing in cache memory **30.** Both the CreateEntry() and GetEntry() calls set locks on associated cached objects until a CloseEntry() call is invoked. Once a lock is set, the cached object will not be replaced or invalidated by cache interface **28,** permitting one or more transcode service providers **24** to safely perform any required cache operations, such as object retrieval and/or storage.

After a cache entry is created or opened by a CreateEntry() or GetEntry() call, the CreateStream() or GetStream() calls may respectively create or open an extra stream entry for the cached object. Each extra stream entry is associated with a different transcoded version of the hypertext object, which may be retrieved or appended to by one of transcode service providers **24.** Stream-based processing of cached objects makes it possible for transcoding server **34** to begin transmitting a transcoded version of a hypertext object to a requesting network client **12** even while transcode service provider **24** is appending additional transcoded content to that same version. Advantages of this stream-based processing include reducing user latency through incremental painting of objects and avoiding unnecessary idle time on client/server communications link **14,** thereby providing users with a more responsive "feel."

The GetProperties() and SetProperties() calls retrieve and store information about cached objects, including information maintained by transcode service provider **24** used to determine transcoding properties and transcoding status of a cached object. Transcode service provider **24** may use such information, for example, to determine current compression progress for scaled data access and staged refinements.

The Read() call reads data from a specified cached object data stream. For example, transcode service provider **24** may invoke this call and tunnel stream data through HTTP remote proxy **36** directly to network client **12.** The Write() call caches data from a new HTTP data stream. This call will append an incoming data stream received from, for example, a Web server or transcode service provider **24,** to an opened cache stream which may be concurrently read using the Read() call.

In the present embodiment, parser **22** includes the following calls:
GetObject(URL, InParams, &OutParams, &OutStream, ...);
GetScaledObject(URL, InParams, &OutParams, &OutStream, Stage, ...);
PutObject(URL, InParamStruct, &InStream, &OutParams, &OutStream, ...).
As detailed below, parser **22** uses these calls to manage the provision of requested content to network client **12.**

The GetObject() call is used to service non-enabled client requests, and returns a non-transcoded (i.e., original) version of a specified hypertext object. In this embodiment, transcoding server **34** assumes that each HTTP request has a unique thread that may be blocked until the request is satisfied. Accordingly, the GetObject() call will block until it either returns the requested data stream or indicates failure with a cause (e.g., object does not exist). This ability to return a so-called standard hypertext object is advantageous for compatibility reasons, enabling embodiments of the present invention to be used with existing browsers that do not include support for certain transcoding functionality (e.g., advanced data compression), and enabling users to selectively retrieve non-transcoded versions.

The GetScaledObject() call is similar to GetObject(), and is also used to request an object from server-side cache memory **30;** however, it adds support for requesting a particular version of that object, such as a high-quality rendition. Unlike traditional caching proxies, transcode service providers **24** can use server-side cache memory **30** to store several different versions of an object to support clients with different communications and/or presentation capabilities. Thus, an additional "Stage" parameter may be used to indicate which version of the cached object is to be returned to network client **12.** Where transcode service provider **24** is configured to scale network content, it may use this parameter to request a version of a cached object having, for example, a default scaled quality, a refinement to a better-quality version, or the original non-scaled version.

In this embodiment, when network client **12** requests a hypertext object, HTTP remote proxy **36** uses either the GetObject() or GetScaledObject() call (depending on if network client **12** is capable of receiving scaled/transcoded datatypes) to retrieve the hypertext object from parser **22.** If the hypertext object is not found, parser **22** uses the CreateEntryO call to create an entry (in effect, a placeholder) in server-side cache memory **30** for the new object. The new entry is returned to HTTP remote proxy **36,** which requests the hypertext object from Internet **18.** As a data stream for the hypertext object is returned, HTTP remote proxy **36** calls parser **22** using the PutObject() call, passing into this call the new entry and the handle to the data stream to be placed into the entry. Parser **22** selects an appropriate transcode service provider **24** based, for example, on the content type of the data stream. In this context, the term content type encompasses a datatype, an HTTP MIME (Multipurpose Internet Mail Extensions) type, a content format, and so on. The selected transcode service provider **24** uses a separate thread to read the incoming data stream, transcode it, and place it within the entry of server-side cache memory **30.** The current thread immediately returns to HTTP remote proxy **36,** which once again calls GetScaledObject() (or GetObject()). This case will always result in a cache hit. This thread then works simultaneously with the separate thread in the PutObject() to tunnel data (either original or transcoded) from transcoding server **34** to network client **12.**

Multiple-thread processing improves the efficiency of the present embodiment by not waiting for a hypertext object to be received in its entirety by HTTP remote proxy **36,** or added in its entirety to server-side cache memory **30,** before beginning to send the object to network client **12.** Another benefit of multiple-thread processing is that parser **22** may efficiently process requests for the same hypertext object from multiple network clients **12.** The hypertext object need only be retrieved from Internet **18** once, and appropriate versions may be transmitted to such multiple network clients **12** concurrently. It should be noted, however, that embodiments of the present invention may be implemented without multiple-thread processing.

As noted above, parser 22 may selectively invoke one of transcode service providers **24** based upon satisfaction of a predetermined selection criterion. Such selection criterion may comprise, for example, information contained in a header portion of a data packet received by transcoding server **34,** such as a MIME type, a URL (Uniform Resource Locator), a last modified time indicator and so on. Alternatively, the predetermined selection criterion may comprise information contained in a data portion of such a data packet, such as particular content, key words, structures (for example, heading levels), and so on. Still further, the predetermined selection criterion may comprise a condition of the device on which transcoding server **34** is installed (for example, a current processing load), a condition of a device to which transcoding server **34** is coupled, or a condition of a communications link. Transcoding server **34** may provide the ability to dynamically update such predetermined selection criteria.

The following discussion provides still more examples of the types of information which may be used to dictate which of transcode service providers **24** are invoked. It should be noted, however, that these examples are provided by way of illustration only, and are not intended to limit in any way the scope of the invention claimed herein. The predetermined selection criterion may comprise: (1) network client **12,** such as a display dimension, resolution, number of colors, processor type, memory/disk configuration, modem or network interface type, installed add-in boards (for example, hardware compression/decompression), software configuration (for example, availability of pre-installed software decompression modules), physical location/proximity (for example, as determined by a telephone area code), and user identity; (2) characteristics of transcoding server **34** or some other network server, including system load and identification information (for example, the owner of the server); (3) content characteristics, such as its data type, type of encoding/compression, size, and dimension; (4) network characteristics, including best-case, worst-case and average latency, bandwidth and/or error rates (for example, for wireless communications) between network client **12** and a proxy, and/or between a proxy and a server (this may be predetermined for guaranteed bandwidth links like ATM (Asynchronous Transfer Mode), or dynamically measured/predicted for so-called "best effort" links like many IP (Internet Protocol) links); (5) proxy characteristics, including system load, available storage, physical location/proximity, and identity (owner); (6) user preferences, including preferred content quality/speed tradeoff, language, content rating, exclusion list, inclusion list, data type-specific preferences (for example, "never download" images), include/exclude advertising, amount of advertising desired, offensive language removal, whether the user's defined or learned preferences may be disclosed (and to whom), custom rules or programs for filtering/transcoding/processing data, and shared preferences with either another user or a group of users (any of the foregoing user preferences may be explicitly defined or system predicated, such as based on usage statistics compiled over time); (7) group preferences, including results from collaborative rating systems, whether manual (for example, a prior user manually assigned a rating to a Web page after viewing it) or automatic (for example, given a large number of users who accessed a link on a given page, the probability of any given user subsequently following that link); (8) content provider preferences, including the degree of alteration desired for its content, the prioritization for download and display of different content types, cache restriction or prioritization parameters such as update frequency or replacement preferences, the types of users to target, rules or programs to run for customizing content (for example, news or advertising, custom language translation software) based on user or client characteristics, desire for receiving certain types of user or group data collected (for example, demographics or access patterns), and type of payment/reward offered in exchange for such information; and (9) other preferences, including software vendor rules or programs for dynamically checking content created or distributed using unauthorized software and companies' desire to enforce correct usage of certain types of content (for example, trademarks and logos).

Applying the above-listed selection criteria, or combinations thereof, embodiments of the present invention may be used to provide a virtually limitless range of dynamic transcoding services. For example, client and/or proxy physical proximity, in combination with demographic data, may be used for extremely targeted advertising. Such advertising may be added to any content passing through a proxy, for example, or some other mechanism. This can in turn be tailored even further based upon the user's willingness to tolerate advertising or share demographic information, as well as the advertiser's ability/willingness to subsidize or otherwise reward the user for participation.

Embodiments of the present invention may be advantageously used to reduce the amount of data that is transmitted to network client 12, thereby promoting faster downloading and rendering of content. Suitable transcoding techniques include lossy compression and transcoding to a more efficient (and perhaps not widely supported) format specifically for the transmission. Similarly, HTTP remote proxy 36 may be configured to "predigest" Web sites or groups of sites to produce extremely condensed overviews of large amounts of content (for example, a tree structure, pages with only first-level or first- and second-level headings, thumbnails of pages, or only parts of a page or site that have changed since the user's last visit). Such applications may be especially advantageous for poorly-connected or computationally limited devices such as PDAs (Personal Digital Assistant), since this predigestion can be performed on a well-connected proxy server with an abundance of computational power, and the concise result can be easily downloaded and rendered on the more limited device.

Embodiments of the present invention may alternatively be used for dynamic translation of data, such as Web pages, to a user's native language (determined by user preference or automatically by the physical location of network client **12** or transcoding server **34**). Such a capability greatly simplifies the task of making content truly global, as well as reduces storage and maintenance required at the content provider (that is, only one copy of the content need be maintained, rather than different copies for each of a plurality of different languages).

Embodiments of the present invention may be used to block certain types of content or to automatically censor offensive language (similar to a "beep" used for television broadcasts). Only the particular offensive parts of the content (for example, obscene words) may be removed, or entire Web sites may be blocked. Similarly, transcoding server **34** may be configured to scan content for certain words or phrases to ensure that trademarks or logos are used correctly (for example, as a source identifier rather than a generic product designation). This feature may be offered as a service to companies or organizations, who would supply a list of words or phrases to flag. A similar capability could be used to automatically insert links into the content upon detection of certain words or phrases. For example, Intel Corporation might want to automatically add a link to its corporate Website whenever the name "Intel" is used in a Web page. Using an embodiment of the present invention, such links can be dynamically added to the content before it is displayed to a user. In a similar vein, an embodiment of the present invention may be used to scan for content that was created or distributed using unlicensed software. This feature may be implemented using special keys (binary bit patterns) embedded in the content or headers put in by the content creation or distribution software. The scanning logic and logic for taking a predetermined responsive action, such as denying service or posting a warning, may optionally be supplied by the vendor of the software in question or configured into transcoding server **34.**

Embodiments of the present invention may also be used to scan content for computer viruses prior to sending such content to network client **12.** For example, an existing virus scanning routine may be installed on transcoding server **34,** possibly as a plug-in module. Transcoding server **34** may then be configured to invoke the virus scanning routine to ensure any content transmitted to network client **12** is free of viruses. A significant advantage provided by such an embodiment is that virus scanning software need only be maintained on transcoding server **34,** rather than on a plurality of network clients **12.** In this way, the benefit of upgrades to the virus checking software may be efficiently and timely provided to large numbers of users, thus avoiding the problem of any particular user relying on outdated virus scanning software.

Embodiments of the present invention may also be used to produce custom content on demand in accordance with user-specific preferences and/or associations with collaborative rating systems. In a variation on such an embodiment, transcoding server **34** can collect preferences and append them as part of a client request transmitted to a content provider so that the dynamic content generation can be done at the content server. Likewise, a proxy provider (for example, an Internet Service Provider (ISP)), can collect and make available to content providers information such as user preferences and data access statistics, as well as content provider specific statistics (for example, how many users from a given region or a given profile accessed a particular Web site, and at what time, in the past month). Such information may be used for applications such as targeted advertising.

Embodiments of the present invention may further be used to automatically check the validity of links in an object, and correct or remove invalid links, prior to transmitting the object to network client **12.** This capability may be provided, for example, as a service to content providers who may not have the most up-to-date information on Websites they are linked to which have moved or been deleted.

To further illustrate the general operation of the embodiment illustrated in **Fig. 3****,** assume a user of network client **12** wishes to access a particular Web page, or URL (Uniform Resource Locator), on Internet **18.** Further assume that the desired URL resides on, or is accessible through, transcoding server **34.** Network client **12,** via browser **32,** transmits an HTTP request for the hypertext object to transcoding server **34** over client/server communications link **14.** Where browser **32** normally accesses Internet **18** through a proxy, browser **32** is configured to pass user requests through transcoding server **34** via browser's **32** standard proxy configuration procedures. As is well known in the art, browser **32** may actually transmit a plurality of additional HTTP requests corresponding to each of various distinct hypertext objects that may be embedded in the Web page. In such a case, transcoding server **34** may process each such request in the manner described below.

According to this embodiment, HTTP remote proxy **36** is capable of distinguishing between a non-enabled network client **12** and an enabled network client **12.** This may be accomplished, for example, using a private protocol to transmit content requests from an enabled network client to transcoding server **34,** so that the use of some other communications protocol indicates network client **12** is non-enabled. This method of sending a private protocol in each request to HTTP remote proxy **36** is an improvement over a registration type process. The overhead involved in making the enabled/non-enabled determination on a per request basis is relatively small, while providing a significant advantage because it addresses the situation for HTTP remote proxy **36** where a first network client disconnects and a second network client, likely with different communications and/or presentation capabilities, reconnects using the same IP address.

Upon determining that network client **12** is non-enabled, HTTP remote proxy **36** may record the IP address of network client **12** in a client preference table **26** maintained in a local data store (client preference table **26** may improve performance of this or other embodiments, but is not required). HTTP remote proxy **36** then passes the hypertext object to parser **22.** HTTP remote proxy **36** may also inform parser **22** of any applicable user preferences (e.g., from client preference table **26**). Upon being invoked, parser **22** first calls cache interface **28** with the requested hypertext object to determine whether a copy of the required version already resides in server-side cache memory **30.** For purposes of illustration, assume no entry exists in server-side cache memory **30** for the requested hypertext object. HTTP remote proxy **36** then invokes a call to retrieve the hypertext object from Internet **18** over server/network communications link **16.** Assuming the requested hypertext object is found, HTTP remote proxy **36** begins receiving an HTTP data stream representing the hypertext object. HTTP remote proxy **36** passes the handle for this incoming data stream to parser **22.**

Parser **22** dynamically determines whether the data stream satisfies any applicable predetermined selection criteria. For example, where transcode service providers **24** are configured to scale data of different types, parser **22** may determine the content type for the data stream (e.g., image/jpeg, image/gif, video/mpeg) by interrogating a MIME type in the content-type header record that appears at the beginning of the incoming HTTP data stream. If parser **22** detects a match for a predetermined selection criterion, the HTTP stream handle is given to the appropriate transcode service provider **24.** Transcode service provider **24** then transcodes the data stream appropriately, and HTTP remote proxy **26** transmits the transcoded data stream to network client **12.**

A non-enabled network client **12** may optionally be provided with the ability to actively control aspects of the transcoding process, or indeed whether or not to transcode requested content at all. To provide this ability, HTTP remote proxy **36** may embed additional instructions at the beginning of the HTML header for the requested URL prior to transmitting the associated data stream to network client **12.** These embedded instructions may be implemented, for example, as JavaScript codes, VB Script codes or Java Applet codes. As browser **32** of network client **12** receives the data stream, the embedded instructions will automatically execute so long as browser **32** is equipped to support them. For example, if the embedded instructions are implemented as JavaScript codes, browser **32** may be a JavaScript-enabled browser such as a Netscape Navigator v.2.0 or above browser, or an Internet Explorer v.3.0 or above browser. If browser **32** is not equipped for such HTML scripting, the embedded instructions will not interfere with the browser's **32** normal processing, as such browsers **32** are typically configured to ignore any data they cannot interpret.

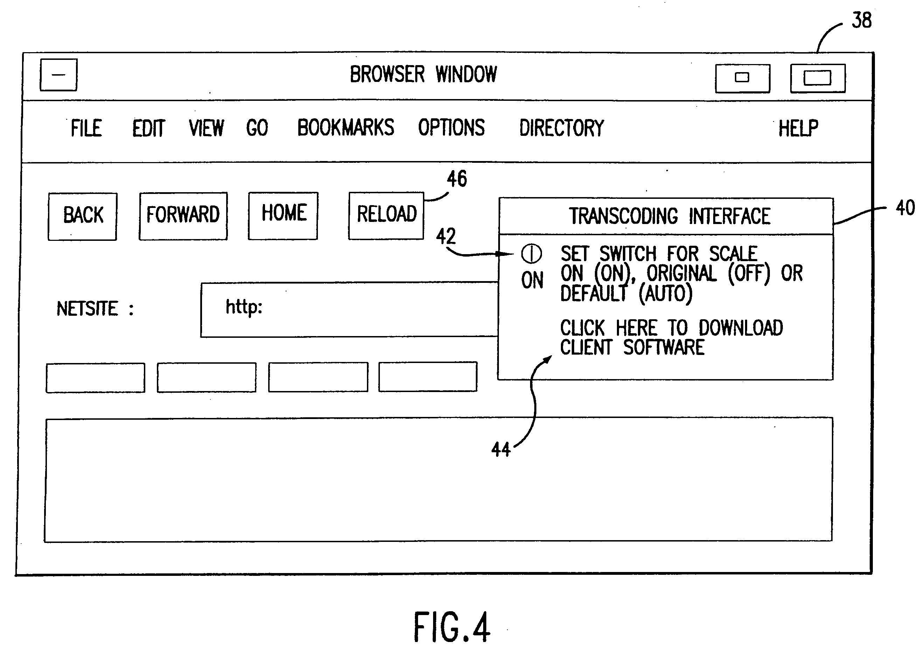

The embedded instructions transmitted to network client **12** may enable the user to manipulate some of the transcoding capabilities of transcoding server **34.** As illustrated in **Fig. 4****,** the embedded instructions may drive a user interface in the form of a pop-up window **40** that is displayed at the top of a browser window **38.** Pop-up window **40** includes a three-state switch **42** having "ON," "OFF" and "AUTO" settings, and may also include a hypertext link **44** which the user may follow to download specialized client software supporting, for example, more sophisticated transcoding functionality (i.e., become "enabled"). The initial setting of three-state switch **42** may be based upon a prior determination by HTTP remote proxy **36** as to whether network client **12** has an established preference for reception of transcoded content. If so, three-state switch **42** may be set to "ON;" if not, three-state switch **42** may be set to "OFF." A goal of this feature is to provide the user with some means for communicating a preference to HTTP remote proxy **36** with regard to aspects of particular transcoding features, such as a content quality/latency tradeoff where the transcoding comprises data compression/scaling. Persons skilled in the art will recognize that many other means for providing this capability are possible, and such other means could enable the user to communicate preferences beyond simply a yes/no indication for transcoding.

In the illustrated in **Fig. 4****,** pop-up window **40** enables the user to change his or her preference as to whether transcoded or original content is desired, and communicates such changes to HTTP remote proxy **36.** Pop-up window **40** may or may not interact with browser **32,** meaning the user's preference will only take effect after setting three-state switch **42** and clicking on the browser's **32** "RELOAD" button **46** to cause **browser 32** to request the (transcoded or un-transcoded) content for presentation to the user. Subsequent pages in the current session may then be rendered in accordance with the new setting of three-state switch **42** without further user intervention. Upon receipt, HTTP remote proxy 36 may update user preference table **26** accordingly. As an alternative, pop-up window **40** may be configured to automatically invoke the "RELOAD" operation when the user indicates a change (such as by flipping three-state switch **42**). Where browser **32** is a JavaScript-enabled browser, JavaScript instructions inserted by HTTP remote proxy **36** in the HTML document may "POST" the state of three-state switch **42** to HTTP remote proxy **36** and also cause browser **32** to "RELOAD" the current URL.

It is possible to allow a non-enabled network client **12** to save the state of three-state switch **42** on network client **12** across multiple sessions of browser **32** using what is known in the art as a "cookie." In other words, a cookie may be used to store the state of three-state switch **42** persistently. When a new session of browser **32** is initiated by a user, this state information may be read from network client **12** and "POSTed" by the JavaScript code (inserted at the beginning of the HTML document) to HTTP remote proxy **36** before any content for the requested hypertext object is actually sent to network client **12.** This will allow HTTP remote proxy **36** to update user preference table **26** with the correct state of three-state switch **42,** and hence send correctly-transcoded content to network client **12.** In such an embodiment, the state information may be "POSTed" to HTTP remote proxy **36** each time a given URL is requested by browser **32.** This will allow network client **12** to receive the correctly-transcoded content even if the HTTP remote proxy **36** to which it is coupled changes due to, for example, a change in geographical location of network client **12** or network load-balancing procedures.

The embodiment shown in **Fig. 3** may also be used for network clients **12** that already access Internet **18** through a standard proxy. JavaScript-enabled browsers **32** may query the local IP address of network client **12** and "POST" this information to HTTP remote proxy **36.** The HTTP header of this "POST" message will contain the IP address of the standard proxy, which will now be different from the IP address of network client **12** (which is included in the contents of the message). A comparison of the two IP addresses will determine whether network client **12** resides behind a standard proxy. HTTP remote proxy may then use this information to update transcoding information about network client **12** in user preference table **26.**

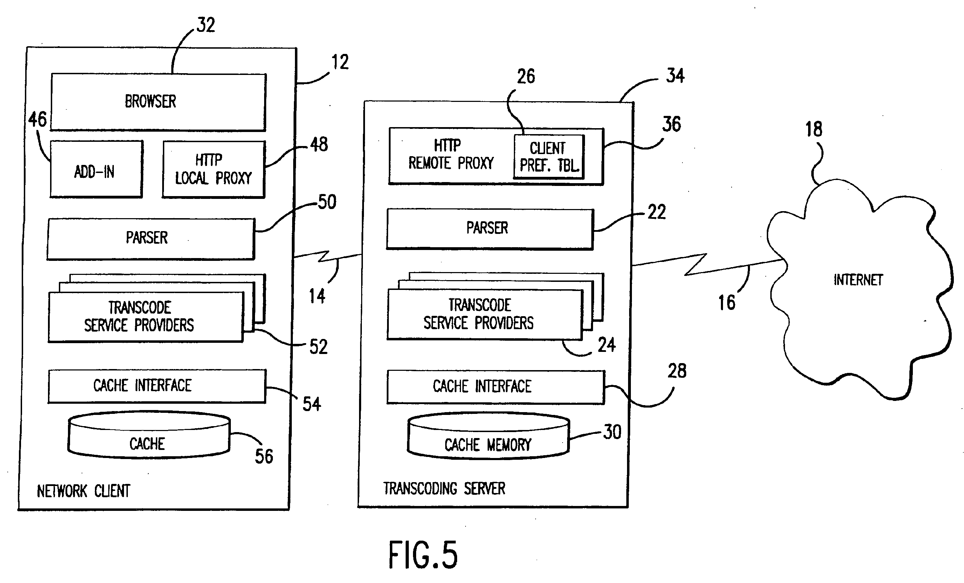

According to another embodiment of the present invention, illustrated in **Fig. 5****,** network client **12** may be "enabled," containing specialized software to support, for example, more sophisticated transcoding features than are provided by the above-described embodiments, or to perform some or all of the transcoding functions on the client side. As illustrated, network client **12** includes an HTTP local proxy **48** coupled to a client-side parser **50** which, similar to parser **22** of transcoding server **34,** controls one or more client-side transcode service providers **52.** Each transcode service provider **52** may be configured, for example, to transcode content before it is rendered to a user or to perform a counterpart transcoding function (e.g., decoding, decompression) with respect to a function performed by a corresponding transcode service provider **24** of transcoding server **34.** As in transcoding server **34,** network client **12** may include a client-side cache memory **56** managed by a client-side cache interface **54.** Client-side cache interface **54** may be an already-existing facility supported by the operating system, such as WININET. Using an existing caching facility reduces the amount of software that is to be downloaded to network client **12** to implement this embodiment, and also allows other applications, such as disconnected browsers, to share client-side cache memory **56.**

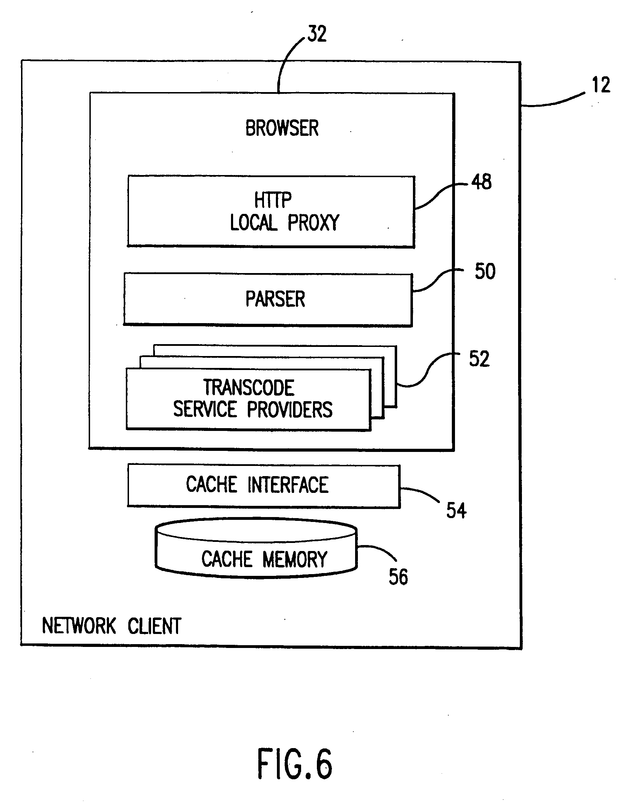

HTTP local proxy **48,** client-side parser **50** and client-side transcode service providers **52** (collectively, the client software) may be downloaded to network client **12** on demand, such as by clicking on hypertext link **44** presented by pop-up window **38** illustrated in **Fig. 4****.** Alternatively, the client software could be distributed to users on a portable storage medium, such as a diskette or CD-ROM, or it may be preloaded on an off-the-shelf personal computer. In the embodiment of **Fig. 5****,** the client software is separate from browser **32;** however, in yet another embodiment the client software may be integrated in browser **32** (see **Fig. 6**).

The enabled client embodiments provide network client **12** with expanded flexibility for rendering hypertext objects. As in the non-enabled client embodiments described above, enabled network client **12** may receive a transcoded data stream from HTTP remote proxy **36** in a format that is already supported by the standard internal rendering software of browser **32** (e.g., JPG, GIF). This would be the case where, for example, the transcoding process involved adding or deleting text to the hypertext object. In addition, HTTP remote proxy **36** may transcode a hypertext object to a data stream having a new MIME type, such as where the transcoding process comprised scaling or data compression, in which case a client-side transcode service provider **52** could be provided to convert the data stream back to a MIME type supported by browser **32.** For example, HTTP remote proxy **36** could transmit a file compressed using a non-standard, not well-supported but leading-edge compression algorithm to network client **12,** and client-side transcode service provider **52** could uncompress the file back to its original format. This approach has the benefit of relieving HTTP local proxy **48** from having to provide a user interface, and eliminates restrictions imposed by limitations as to the data types supported by browser **32.** In this way, the transcoding process can remain transparent to users, browsers and Web servers even when it involves changing content to different datatypes.

Yet another possibility is that enabled network client **12** includes one or more add-ins **46** specifically configured to transcode, render or playback content received by network client **12.** Add-ins **46** may be implemented, for example, using Netscape plug-ins or ActiveX controls. Moreover, add-ins **46** may be installed as part of the client software, as illustrated in **Fig. 5****,** or integrated with browser **32.** Such add-ins **46** are beneficial in that they generally may be configured to permit a user to click on a specific object to obtain a different version (e.g., higher quality) representation. Add-ins **46** are also beneficial in that they appear to a user to be well-integrated with browser **32,** and are easily upgradeable. Combinations of the above-described presentation facilities are also possible.

In an advantageous optional application of add-ins **46,** network client 12 may be configured to request that an appropriate add-in **46** be downloaded from HTTP remote proxy **36** in the event that network client **12** determines it is unable to transcode a particular received data stream. HTTP remote proxy **36** could then download the necessary add-in **46** or, alternatively, resend the data stream in a different format. This facility provides for automatic extension of the system, ensuring that client software is as current as possible.

In the embodiment of **Fig. 5****,** browser **32** is configured to send all HTTP requests through HTTP local proxy **48,** thus allowing HTTP local proxy **48** to improve retrieval and rendering of requested hypertext objects. For example, when HTTP local proxy **48** receives an HTTP request from browser **32** for a hypertext object associated with a Web page, it passes the URL to client-side cache interface **54** to check whether a copy of the hypertext object already exists in client-side cache memory **56.** If the hypertext object is cached, HTTP local proxy **48** passes the cached object to browser **32** for rendering. If the requested hypertext object is not cached, HTTP local proxy **48** transmits an HTTP request to transcoding server **34** for processing. HTTP local proxy **48** may use a custom Get() request for this purpose to enable transcoding server **34** to identify network client 12 as enabled. Performing the processing described above with reference to other embodiments, transcoding server **34** will return a data stream for the hypertext object to HTTP local proxy **48.**

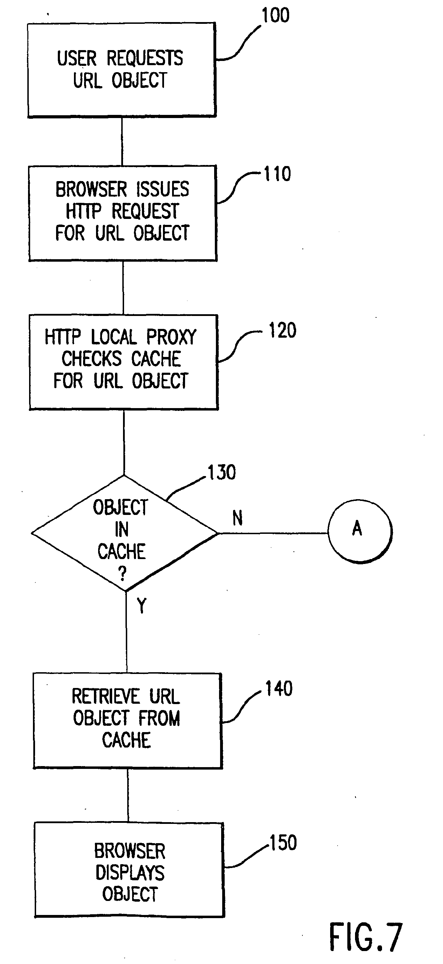

To further illustrate the features and benefits of embodiments of the present invention, the flow charts provided in **Figs. 7-9** illustrate the logic for an embodiment of a method by which an enabled network client may render a hypertext object resident on the Internet. The flow charts are not intended to be comprehensive of all processing that is performed, but rather are intended to describe the overall flow of the method. Detailed descriptions of the various processes have been provided above with reference to various disclosed embodiments. Where practical, the following description includes reference numbers for previously-described structural elements, although the method is not limited to those structures.

Referring now to **Fig. 7****,** processing begins when a user on network client **12** requests a hypertext object from browser **32 (Step 100).** This could be in the form of a request for a specific Web page, in which case a plurality of hypertext objects will likely be displayed to the user, or in the form of a click on an image already being displayed to the user. Browser **32** may be configured to pass all HTTP requests through HTTP local proxy **48,** so HTTP local proxy **48** may intercept the HTTP(URL) request from browser **32** (**Step 110**).

In this particular embodiment, HTTP local proxy **48** first checks whether the requested hypertext object exists in client-side cache memory **56** (**Step** 120). To do this, HTTP local proxy **48** may invoke client-side parser **50** using a GetScaledObject(URL) call, which in turn issues a GetEntry call to client-side cache interface **54** to open a stream for the cached object. This effectively "retrieves" the cached object from client-side cache memory **56** if it exists (**Step 140**). HTTP local proxy **48** then passes the stream to browser **32,** which displays the cached object to the user (**Step 150**).

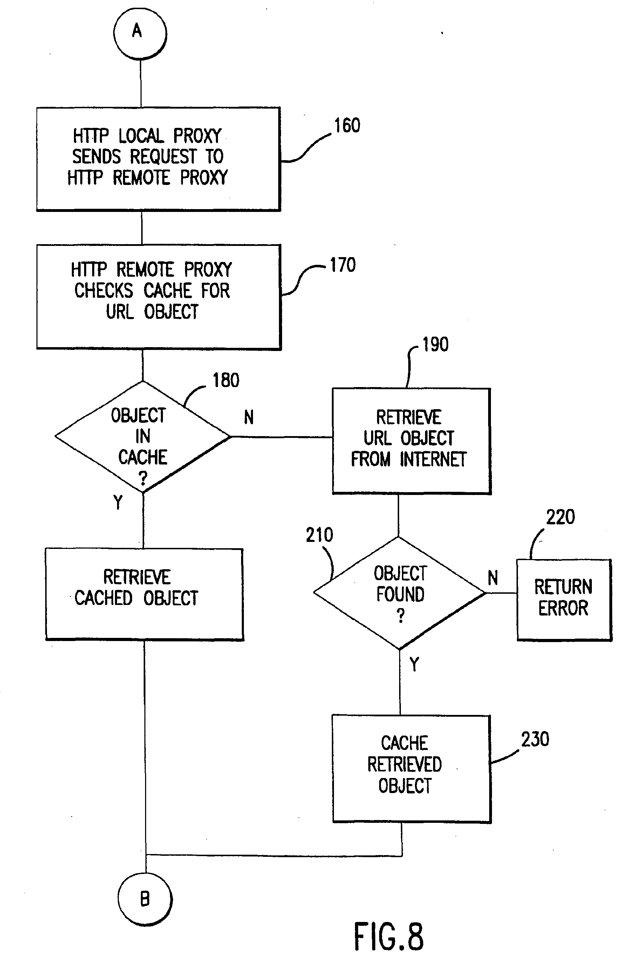

Referring now to **Fig. 8****,** if the requested URL object is not found in client-side cache memory **56,** HTTP local proxy **48** transmits a request for the object to transcoding server **34** using, for example, a Post of a GetStage(URL, Stage=0) call (**Step 160**). Upon receipt of this call, HTTP remote proxy **36** invokes parser **22,** which in turn issues a GetScaledObject() call to server-side cache interface **28** to determine whether a non-transcoded version of the requested hypertext object already exists in the server-side cache memory **30** (**Step 170**). If the hypertext object is cached, server-side cache interface **28** issues a GetEntry call to open a stream for the cached object (**Step 200**). In addition, parser **22** may issue a GetProperties(URL, ...) call to server-side cache interface **28** to retrieve information about the transcoding properties and transcoded status (such as the refinement level) of the cached object.

If parser **22** determines that the requested hypertext object does not exist in the server-side cache memory **30,** HTTP remote proxy **36** issues an HTTP request to retrieve the hypertext object from Internet **18** (**Step 190**). If the object is not found, HTTP remote proxy **36** returns an error to network client **12** which browser **32** will communicate to the user (**Step 220**); if the object is found, HTTP remote proxy **36** passes the handle for the incoming data stream to parser **22,** which in turn initiates caching of an original version of the retrieved hypertext object **(Step 230).**

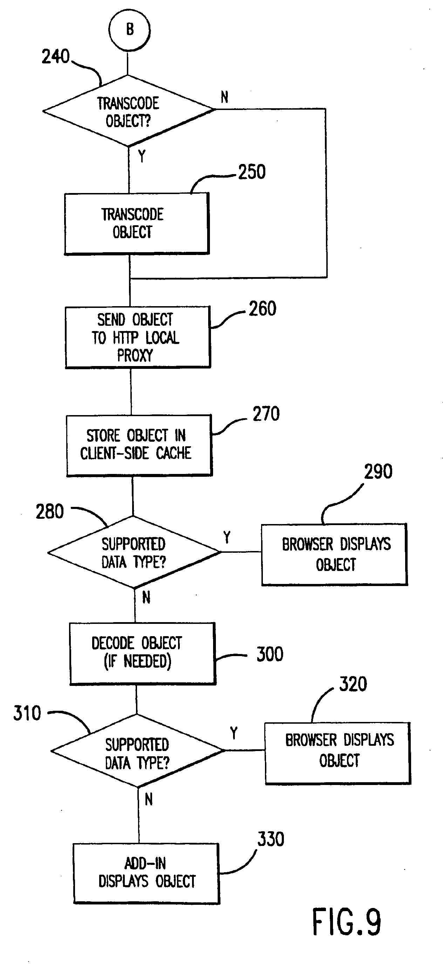

Referring now to **Fig. 9****,** once the requested hypertext object has started to be obtained, parser **22** determines whether (and how) to transcode the object before transmitting it to network client **12** (**Step 240**). Both this decision-making process and exemplary transcoding processes are described in detail above. For purposes of the present illustration, assume parser **22** determined that transcoding was appropriate and therefore generated a transcoded version of the requested hypertext object (Step 250). HTTP remote proxy **36** transmits a data stream for the transcoded hypertext object to network client **12** (**Step 260**). Upon receipt, HTTP local proxy **48** initiates caching of the transcoded hypertext object (**Step 270**). In addition, client-side parser **50** determines whether any further processing is required before the hypertext object is rendered (e.g., a new MIME type has been established by transcoding server **34**) (**Step 280**).

If no additional transcoding is required, HTTP local proxy **48** passes the handle for the received data stream to browser **32** for display to the user (**Step 290**). If additional transcoding is required, client-side parser **50** passes the handle to an appropriate transcode service provider **52** (**Step 300**). The result of this latter processing may be a hypertext object which browser **32** can readily display to the user (**Step 320**), or the result may be a hypertext object having a non-standard MIME type, in which case browser **32** may invoke add-in **46** to display the object (**Step 330**).

According to another embodiment of the present invention, additional data or programs need not necessarily be inserted as part of a response to a client request. Rather, data and programs may be transparently "pushed" to network client **12** without the user or the browser **32** software's detection or intervention. One advantage of this approach is that transcoding server **34** is able to detect when client/server communications link **14** is underutilized, and can thus push data to network client **12** with limited risk of interfering with other transactions. An especially advantageous implementation uses at least a local proxy, which could issue its own requests (rather than being user-driven) to content providers or networked proxy servers, or receive unsolicited data pushed to it from the network. The local proxy may store the data in a client-side cache, install it as a program, or prompt the user to take some further action. Many potential uses for such an embodiment are possible. For example, an advertiser of software products or music can preload network client **12** with trial versions of products before prompting the user with an advertisement, thus enabling instant playback capability without the user having to wait for a demo to be downloaded (and possibly losing interest in the meantime).

A number of different configurations are possible for implementing embodiments of the present invention. In a first configuration, the only additional apparatus required is a remote proxy. That is, no new software needs to be installed on network client **12.** The remote proxy may reside anywhere on a suitable network, such as the Internet, including at particular content provider sites. Alternatively, the remote proxy may be located at ISP local POPs (Point of Presence), for example, if location-specific characteristics are to be used as predetermined selection criteria. Of course, such information can be gathered by other methods as well, such as user-preference settings or assigning location-specific domain names to proxies. In a second configuration, a new piece of client software acting as a local proxy may be installed, for example, on a client device. The user would then point the client application's proxy to the local host. Combinations of these exemplary configurations are likewise possible, as well as simultaneously having multiple modes active (for example, a local proxy acting as a pass-through for some requests and a non-pass-through for others that require the use of a remote proxy).

Where network client **12** connects to a remote proxy over a relatively slow communications link, it may be particularly advantageous to implement transcoding and link validity checking on remote proxies. Combinations of remote and local proxies can sometimes give more efficient implementations of certain applications, such as automatic data/program download and interactively displaying predigested content. Other applications, such as translation and trademark enforcement, can be done efficiently on local proxies alone, but may be more advantageously done on remote proxies because the results can be cached for use by others, thereby saving resources for future requests. Still other applications, such as clickstream analysis, are generally better implemented on a local proxy because there are more resources available locally to the individual user, and also for privacy reasons.

In view of the foregoing description, it should be apparent that it is possible for there to be more than one so-called "smart" proxy arranged between a client device and a content server device. If left unchecked, such a condition can result in content being altered excessively (for example, too many ads inserted, multiple lossy compressions resulting in indecipherable images). To address this problem, an embodiment of the present invention may use a special proxy-to-proxy protocol that extends the existing request/response structures to indicate whether and what sort of transcoding has already been performed on the content. Such a specialized protocol, in addition to other proxy-to-proxy messages which may be implemented on an as-needed basis, enables multiple proxies to work collaboratively, yet still transparently to users, client software, existing "standard" proxies and content servers.

According to yet another embodiment of the present invention, a proxy server may be used to provide certain Internet proxy or server users with so-called "VIP" treatment, identifying users who are entitled (either through payment or based on some other selection criterion, such as extent of usage) to have a higher priority when competing with other users for proxy resources. By contrast, with existing Internet proxies and servers, users are serviced either on a random or first-come/first-served basis.

In one particular implementation of such an embodiment, transcoding server **34** may be configured to extract user IP addresses from requests it processes and maintain information such as how frequently, or for what duration, a user is browsing a particular Web site. Such information could be used to determine "frequent browser miles" at particular Web sites. Users can then be rewarded with faster response times for subsequent visits to the site, or the site owner could choose to reward the user with improved performance on all sites reached through the same proxy. Still another possibility is that users may pay for such preferred service, being assigned a password which may be provided to transcoding server **34.** Yet another possibility is that a Web site owner can pay a proxy provider to improve the performance of all users while visiting the owner's site.

In another particular implementation, information identifying users to be given VIP treatment may be passed to transcoding server **34** in the form of a Web page. Upon receipt of such a Web page, the proxy may subsequently allow servicing threads to perform work for requests generated by VIP users first. To do this, transcoding server **34** may boost thread scheduling priorities (within the operating system) for the VIP service, while ensuring there is no starvation of any thread (that is, no user should be denied access entirely by VIP users). In addition, transcoding server **34** may permit preferential caching for particular Web sites and more aggressive pre-fetching for VIP users. Still further, transcoding server **34** may use more resource-intensive compression algorithms, for example, to provide better quality content for the same latency at the expense of slowing down access for non-VIP users.

It is possible that certain content providers or users will not wish to have their content dynamically altered in any manner. Accordingly, embodiments of the present invention may be implemented in such a way that either content providers or users are given the capability to override any potentially content-altering service. This may be accomplished, for example, using a pass-through technique triggered by a special tag embedded within the content.

As the foregoing description demonstrates, embodiments of the present invention may be used to provide a system for improving the communications capabilities of computers accessing networks such as the Internet. Embodiments of the invention may be advantageously applied to computers having limited communications bandwidth available, such as mobile computers or personal computers accessing a network over a modem connection. The unique features of such embodiments enhance the ability of these computers to access data on the network in a timely fashion with reduced user-visible latencies, thereby enabling content authors to produce rich content without fear that only users with highly-sophisticated data communications and display capabilities are able to enjoy it. Embodiments of the present invention may also be advantageously used for purposes other than, or in addition to, reducing latency. Such purposes include, for example, converting color images to greyscale images for users lacking a color display; filtering and/or deleting undesired content, such as pornography; adding content, such as advertising; and language translation.

Although the present invention has been described with reference to embodiments for accessing data from the Internet, persons skilled in the art will recognize that it is equally applicable to other networking environments. For example, embodiments of the present invention may be used to enhance data communications between a network client computer and an "intranet." An intranet typically is a secure corporate network modeled after the Internet architecture, and generally includes mechanisms for communicating with external networks such as the Internet.

The foregoing is a detailed description of particular embodiments of the present invention. The invention embraces all alternatives, modifications and variations that fall within the letter of the claims.

For example, some or all of the features described above as being provided by a remote proxy may be implemented in a content server. Likewise, some or all of the features described above as being provided by a local proxy may be implemented in a browser application. Persons skilled in the art will recognize from the foregoing detailed description that many other alternatives, modifications and variations are possible.

## Claims

1. A method for providing a network client with a data object residing on a network server, said method comprising:
receiving a first request for a data object from a first network client (12); and
retrieving the requested data object from the network server (10);
**characterised in that** the method further comprises:
determining whether the data object includes textual content satisfying a predetermined criterion of a plurality of selection criteria,
selectively transcoding the data object according to the predetermined criterion and providing the transcoded data object to the first network client (12), upon determining that the data object includes textual content satisfying the predetermined criterion, and
providing the data object retrieved from the network server (10) to the first network client (12), upon determining that the data object does not include textual content satisfying the predetermined criterion .

2. The method of claim 1, further comprising;
storing then transcoded data object in a cache (30) as a first transcoded data object;
responsive to a second request for the data object from a second network client, determining whether the the data object includes textual content satisfying the predetermined criterion, and
retrieving the first transcoded data object from the cache (30) and providing the first transcoded data object to the second network client, upon determining that the data object includes textual content satisfying the predetermined criterion.

3. The method of claim 2, further comprising;
storing the data object retrieved from the network server (10) in the cache (30);
in a case where the data object does not include textual content satisfying the predetermined criterion, determining whether a second selection criterion is satisfied, the second selection criteria being different from the criterion as to whether the data object includes textual content satisfying a predetermined criterion, and
retrieving the data object from the cache (30), selectively transcoding, according to the second selection criterion, the
data object into a second transcoded data object and providing the second transcoded data object to the second network client.

4. The method of claim 3, further comprising storing the second transcoded data object in the cache (30), wherein the data object retrieved from the network server (10), the first transcoded data object, and the second transcoded data object coexist in the cache (30) as multiple representations of a same data object.

5. The method of claim 1, the first selection criterion being based on a specification to exclude a type of content in preferences of a user of the first network client (12), selectively transcoding the data object comprising removing the specified content from the data object.

6. The method of claim 5, the type of content to exclude being selected
from advertising, and offensive language.

7. The method of claim 1, the first selection criterion being based on preferences specified by a content provider of the data object.

8. The method of claim 7 wherein the first selection criterion is selected
from whether the content provider preferences specify the types of users to whom the content should be provided, and whether the content provider preferences specify rules to customize the content based on user or client characteristics.

9. The method of claim 1, further comprising storing at least one of the data object retrieved from the network server (10) and the transcoded data object in a cache (30) in accordance with a cache restriction preference specified by a content provider of the data object.

10. The method of claim 1, further comprising:
storing at least one of the data object retrieved from the network server (10) and the transcoded data object in a cache (30); and
updating or replacing content of the data object and/or transcoded stored in the cache (30) in accordance with a frequency specified by a content provider of the data object.

11. The method of claim 1, wherein the first criterion is satisfied if a specific word, or phrase appears in the data object.

12. The method of claim 11, wherein the specific word, or phrase is selected from a trademark and a company logo.

13. The method of claim 12, wherein selectively transcoding the data
object includes verifying that the trademark or company logo is used as a source identifier rather than a generic product designation.

14. The method of claim 12, wherein selectively transcoding the data
object includes adding a Web link to each occurrence of the trademark or company logo.

15. The method of claim 1, the first selection criterion being the presence of a Web link in the data object, selectively transcoding the data comprising automatically checking the validity of the Web link, and correcting or removing the link if invalid prior to providing the transcoded data object to the first network client (12).

16. The method of claim 1, performed by a first network proxy (36), the method further comprising:
responsive to a second request for a data object from a second network client, determining that a second selection criterion of the plurality of selection criteria is satisfied; and
requesting, from a second network proxy, an indication of what transcoding has already been performed on content of the data object in accordance with the second selection criterion.

## Patentansprüche

1. Verfahren zum Versehen eines Netzwerk-Clients mit einem Datenobjekt, das auf einem Netzwerk-Server residiert, wobei das Verfahren umfasst:
Empfangen einer ersten Anforderung für ein Datenobjekt von einem ersten Netzwerk-Client (12); und
Abrufen des angeforderten Datenobjekts vom Netzwerk-Server (10);
**dadurch gekennzeichnet, dass** das Verfahren ferner umfasst:
Ermitteln, ob das Datenobjekt textlichen Inhalt einschließt, der ein vorbestimmtes Kriterium einer Vielzahl von Auswahlkriterien erfüllt,
Selektives Transcodieren des Datenobjekts gemäß dem vorbestimmten Kriterium und Bereitstellen des transcodierten Datenobjekts an den ersten Netzwerk-Client (12), nach Ermitteln, dass das Datenobjekt textlichen Inhalt einschließt, der das vorbestimmte Kriterium erfüllt, und
Bereitstellen des aus dem Netzwerk-Server (10) abgerufenen Datenobjekts an den ersten Netzwerk-Client (12), nach Ermitteln, dass das Datenobjekt keinen textlichen Inhalt einschließt, der das vorbestimmte Kriterium erfüllt.

2. Verfahren nach Anspruch 1, ferner umfassend:
Speichern des transcodierten Datenobjekts in einem Cache-Speicher (30) als ein erstes transcodiertes Datenobjekt;
Reagierend auf eine zweite Anforderung für das Datenobjekt von einem zweiten Netzwerk-Client, Ermitteln, ob das Datenobjekt textlichen Inhalt einschließt, der ein vorbestimmtes Kriterium erfüllt, und
Abrufen des ersten transcodierten Datenobjekts aus dem Cache-Speicher (30) und Bereitstellen des ersten transcodierten Datenobjekts an den zweiten Netzwerk-Client, nach Ermitteln, dass das Datenobjekt textlichen Inhalt einschließt, der das vorbestimmte Kriterium erfüllt.

3. Verfahren nach Anspruch 2, ferner umfassend:
Speichern des aus dem Netzwerk-Server (10) abgerufenen Datenobjekts im Cache-Speicher (30);
in einem Fall, wo das Datenobjekt keinen textlichen Inhalt einschließt, der das vorbestimmte Kriterium erfüllt, Ermitteln, ob ein zweites Auswahlkriterium erfüllt ist,
wobei das zweite Auswahlkriterium darüber vom Kriterium verschieden ist, ob das Datenobjekt textlichen Inhalt einschließt, der ein vorbestimmtes Kriterium erfüllt, und
Abrufen des Datenobjekts aus dem Cache-Speicher (30), selektives Transcodieren, gemäß des zweiten Auswahlkriteriums, des Datenobjekts in ein zweites transcodiertes Datenobjekt und Bereitstellen des zweiten transcodierten Datenobjekts an den zweiten Netzwerk-Client.

4. Verfahren nach Anspruch 3, das ferner das Speichern des zweiten transcodierten Datenobjekts im Cache-Speicher (30) umfasst,
wobei das vom Netzwerk-Server (10) abgerufene Datenobjekt, das erste transcodierte Datenobjekt und das zweite transcodierte Datenobjekt im Cache-Speicher (30) als mehrfache Repräsentationen des gleichen Datenobjekts koexistieren.

5. Verfahren nach Anspruch 1, wobei das erste Auswahlkriterium auf einer Spezifikation beruht, eine Art von Inhalt in Bevorzugungen eines Benutzers des ersten Netzwerk-Clients (12) auszuschließen, wobei das selektive Transcodieren des Datenobjekts, das Entfernen des spezifizierten Inhalts aus dem Datenobjekt umfasst.

6. Verfahren nach Anspruch 5, wobei die Art von auszuschließendem Inhalt aus Werbung und beleidigender Sprache selektiert ist.

7. Verfahren nach Anspruch 1, wobei das erste Auswahlkriterium auf Bevorzugungen basiert, die von einem Provider des Datenobjekts spezifiziert sind.

8. Verfahren nach Anspruch 7, wobei das erste Auswahlkriterium bezüglich dessen selektiert wird, ob die Bevorzugungen des Inhalt-Providers die Arten von Benutzern spezifizieren, denen der Inhalt bereitgestellt werden sollte, und ob die Bevorzugungen des Inhalt-Providers Regeln spezifizieren, um den Inhalt auf Benutzer- oder Client-Kennlinien basierend anzupassen.

9. Verfahren nach Anspruch 1, das ferner das Speichern wenigstens eines des Datenobjekts, das aus dem Netzwerk-Server (10) abgerufen wurde und des transcodierten Datenobjekts in einem Cache-Speicher (30) in Übereinstimmung mit einer Cache-Speiche-Begrenzungsbevorzugung umfasst, die von einem Inhalt-Provider des Datenobjekts spezifiziert wurde.

10. Verfahren nach Anspruch 1, ferner umfassend:
Speichern wenigstens eines des aus dem Netzwerk-Server (10) abgerufenen Datenobjekts und des transcodierten Datenobjekts in einem Cache-Speicher (30); und
Aktualisieren oder Ersetzen von Inhalt des Datenobjekts und/oder transcodiert im Cache-Speicher (30) in Übereinstimmung mit einer Häufigkeit gespeichert, die von einem Inhalt-Provider des Datenobjekts spezifiziert wurde.

11. Verfahren nach Anspruch 1, wobei das erste Kriterium erfüllt ist, wenn ein spezielles Wort oder eine spezielle Phrase im Datenobjekt auftaucht.

12. Verfahren nach Anspruch 11, wobei das spezielle Wort oder die spezielle Phrase aus einem Markenzeichen und einem Firmenlogo selektiert wird.

13. Verfahren nach Anspruch 12, wobei selektives Transcodieren des Datenobjekts das Verifizieren einschließt, dass das Markenzeichen oder Firmenlogo eher als ein Quellenbezeichner als eine generische Erzeugniskennzeichnung verwendet wird.

14. Verfahren nach Anspruch 12, wobei das selektive Transcodieren des Datenobjekts das Hinzufügen einer Web-Verbindung zu jedem Auftreten des Markenzeichens oder Firmenlogos einschließt.

15. Verfahren nach Anspruch 1, wobei das erste Auswahlkriterium das Vorhandensein einer Web-Verbindung im Datenobjekt ist, das selektive Transcodieren der Daten das automatische Überprüfen der Validität der Web-Verbindung und das Berichtigen oder Entfernen der Verbindung, wenn vor dem Bereitstellen des transcodierten Datenobjekts an den ersten Netzwerk-Client (12) ungültig, umfasst.

16. Verfahren nach Anspruch 1, von einem ersten Netzwerk-Proxy (36) ausgeführt, wobei das Verfahren ferner umfasst:
Reagierend auf eine zweite Anforderung für ein Datenobjekt von einem zweiten Netzwerk-Client, Ermitteln, dass ein zweites Auswahlkriterium der Vielzahl von Auswahlkriterien erfüllt ist; und
Anfordern, von einem zweiten Netzwerk-Proxy, einer Anzeige hinsichtlich, welches Transcodieren bereits mit dem Inhalt des Datenobjekts in Übereinstimmung mit dem zweiten Auswahlkriterium ausgeführt worden ist.

## Revendications

1. Un procédé destiné à fournir à un client de réseau un objet de données résidant sur un serveur de réseau, ledit procédé comprenant :
la réception d'une première demande d'un objet de données d'un premier client de réseau (12) ; et
la récupération de l'objet de données demandé depuis le serveur de réseau (10) ;
**caractérisé en ce que** le procédé comprend en outre :
la détermination de savoir si l'objet de données inclut un contenu textuel satisfaisant un critère prédéterminé d'une pluralité de critères de sélection,
le transcodage sélectif de l'objet de données selon le critère prédéterminé, et
la fourniture de l'objet de données transcodé au premier client de réseau (12), lors de la détermination que l'objet de données inclut un contenu textuel satisfaisant le critère prédéterminé, et
la fourniture de l'objet de données récupéré depuis le serveur de réseau (10) au premier client de réseau (12), lors de la détermination que l'objet de données n'inclut pas un contenu textuel satisfaisant le critère prédéterminé

2. Le procédé selon la revendication 1, comprenant en outre :
le stockage de l'objet de données transcodé dans une mémoire cache (30) en tant que premier objet de données transcodé ;
en réponse à une deuxième demande de l'objet de données par un deuxième client de réseau, la détermination de savoir si l'objet de données inclut un contenu textuel satisfaisant le critère prédéterminé, et
la récupération du premier objet de données transcodé depuis la mémoire cache (30) et
la fourniture du premier objet de données transcodé au deuxième client de réseau, lors de la détermination que l'objet de données inclut un contenu textuel satisfaisant le critère prédéterminé.

3. Le procédé selon la revendication 2, comprenant en outre :
le stockage de l'objet de données récupéré depuis le serveur de réseau (10) dans la mémoire cache (30) ;
dans le cas où l'objet de données n'inclut pas un contenu textuel satisfaisant le critère prédéterminé, la détermination de savoir si un deuxième critère de sélection est satisfait, les deuxièmes critères de sélection étant différents du critère quant à savoir si l'objet de données inclut un contenu textuel satisfaisant un critère prédéterminé, et
la récupération de l'objet de données depuis la mémoire cache (30),
le transcodage sélectif, selon le deuxième critère de sélection, de l'objet de données en un deuxième objet de données transcodé, et
la fourniture du deuxième objet de données transcodé au deuxième client de réseau.

4. Le procédé selon la revendication 3, comprenant en outre le stockage du deuxième objet de données transcodé dans la mémoire cache (30), dans lequel l'objet de données récupéré depuis le serveur de réseau (10), le premier objet de données transcodé et le deuxième objet de données transcodé coexistent dans la mémoire cache (30) en tant que représentations multiples d'un même objet de données.

5. Le procédé selon la revendication 1, le premier critère de sélection étant basé sur une spécification pour exclure un type de contenu dans des préférences d'un utilisateur du premier client de réseau (12), le transcodage sélectif de l'objet de données comprenant la suppression de contenu spécifié de l'objet de données.

6. Le procédé selon la revendication 5, le type de contenu à exclure étant sélectionné dans soit la publicité, soit des propos injurieux.

7. Le procédé selon la revendication 1, le premier critère de sélection étant basé sur des préférences spécifiées par un fournisseur de contenu de l'objet de données.

8. Le procédé selon la revendication 7 dans lequel le premier critère de sélection est sélectionné parmi savoir si les préférences du fournisseur de contenu spécifient les types d'utilisateurs auxquels le contenu doit être fourni, et savoir si les préférences du fournisseur de contenu spécifient des règles pour personnaliser le contenu basé sur des caractéristiques de l'utilisateur ou du client.

9. Le procédé selon la revendication 1, comprenant en outre le stockage d'un ou de plusieurs objets de données récupérés depuis le serveur de réseau (10) et des objets de données transcodés dans une mémoire cache (30) selon une préférence de restriction de la mémoire cache spécifiée par un fournisseur de contenu de l'objet de données.

10. Le procédé selon la revendication 1, comprenant en outre :
le stockage d'un ou de plusieurs objets de données récupérés depuis le serveur de réseau (10) et des objets de données transcodés dans une mémoire cache (30) ; et
la mise à jour ou le remplacement du contenu de l'objet de données et/ou transcodé, stocké dans la mémoire cache (30) selon une fréquence spécifiée par un fournisseur de contenu de l'objet de données.

11. Le procédé selon la revendication 1, dans lequel le premier critère est satisfait si un mot spécifique ou une phrase apparaît dans l'objet de données.

12. Le procédé selon la revendication 11, dans lequel le mot ou la phrase spécifique est sélectionné parmi une marque commerciale et un logo d'entreprise.

13. Le procédé selon la revendication 12, dans lequel le transcodage sélectif de l'objet de données inclut la vérification que la marque commerciale ou le logo de l'entreprise est utilisé en tant qu'identificateur d'origine plutôt que désignation d'un produit générique.

14. Le procédé selon la revendication 12, dans lequel le transcodage sélectif de l'objet de données inclut l'ajout d'un lien internet à chaque occurrence de la marque commerciale ou du logo d'entreprise.

15. Le procédé selon la revendication 1, le premier critère de sélection étant la présence d'un lien internet dans l'objet de données, le transcodage sélectif des données comprenant la vérification automatique de la validité du lien internet, et la correction ou la suppression du lien s'il est invalide avant de fournir l'objet de données transcodé au premier client de réseau (12).

16. Le procédé selon la revendication 1, effectué par un premier mandataire de réseau (36), le procédé comprenant en outre :
en réponse à une deuxième demande d'un objet de données par un deuxième client de réseau, la détermination qu'un deuxième critère de sélection de la pluralité de critères de sélection est satisfait ; et
la demande, par un deuxième mandataire de réseau, d'une indication de ce que le transcodage a déjà effectué sur le contenu de l'objet de données selon le deuxième critère de sélection.
